# EUROPEAN PATENT APPLICATION

(11) **EP 1 677 558 A1**
(43) Date of publication of application: **05.07.2006**
(21) Application number: 04773497.5
(22) Date of filing: 24.09.2004
(51) Int. Cl.: H04Q 7/38, H04M 3/00

(54) **SYSTEM FOR RECEIVING CALL HAVING PRIORITY IN CALL REGULATION, METHOD FOR RECEIVING CALL HAVING PRIORITY, AND PROGRAM THEREOF**

(30) Priority: 25.09.2003 JP 2003333297
(71) Applicant: NEC CORPORATION, Minato-ku, Tokyo 108-8001 (JP)
(72) Inventor: HIRADE, Sei, Minato-ku, Tokyo 1088001 (JP)
(74) Representative: Reeve, Nicholas Edward
(86) International application number: PCT/JP2004/014409
(87) International publication number: WO 2005/032198

(57) **Abstract**

A mobile terminal (1) includes a call request unit (11), a memory unit (12), and a call request probability generation unit (13). A base station (2) includes a t traffic measurement unit (21), and a call regulation transmission unit (22). The call request unit (11) acquires a transmission destination telephone number (111) which has been requested by a subscriber. Moreover, the call request unit (11) receives a call regulation signal from the base station (2) and acquires call regulation values M1112, M2113 (M1 < M2). The call regulation values M1, M2 (M1 < M2) are assumed to be a call regulation value M1112 for the transmission destination telephone number having priority and a call regulation value M2113 for other than the transmission destination telephone number having priority.

## Description

### TECHNICAL FIELD

The present invention relates to a system for receiving a call having priority in a call regulation, a method for receiving a call having priority, and a program for allowing a computer or a microprocessor to execute the method for receiving a call having priority.

### BACKGROUND ART

A call regulation method is employed for conducting a call regulation depending on communication traffic in a mobile communication system.

The following is an example of conventional call regulation methods. Namely, Japanese Unexamined Patent Publication No. 4-373325 and Japanese Patent Publication No. 2994491 disclose typical example of the conventional call regulation method.

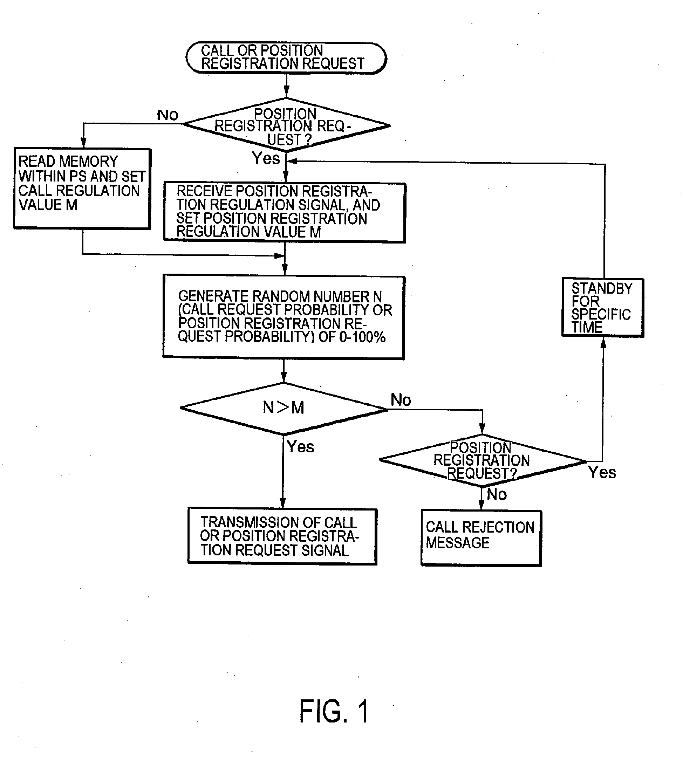

Figure 1 is a flow chart illustrating the procedure of operation of a call regulation method described in these publications. A mobile terminal receives a call regulation call from a base station, and when calling during the time it exists in a regulation area, judges whether a call is possible or not by comparing a random number value generated by itself and a call regulation value of the base station.

However, there was the following problem in the above-mentioned conventional system.

In a call regulation, even for a subscriber making a call to an emergency destination, such as a report to the number "110" (an emergency call number for police in Japan) or a report to the number "119" (an emergency call number for an ambulance), a call request may be rejected over a long period of time, depending on the occurrence of a random number value to be generated within a mobile terminal.

The reason for this is that in the conventional system every call is dealt with equally in the processing of calls under regulation.

An object of the present invention is to provide a system for receiving a call having priority, a method for receiving a call having priority in a call regulation, and a program thereof, which improve emergency service performance under regulation.

### DISCLOSURE OF THE INVENTION

A system for receiving a call having priority in a call regulation is comprised of a mobile terminal and a base station. The base station has a traffic measurement unit and a call regulation transmission unit. The traffic measurement unit measures communication traffic by receiving a call request signal transmitted from the mobile terminal, and counting the number of received signals in given times. The call regulation transmission unit transmits a call regulation signal to regulate a call if a measured value of communication traffic is not less than a given value, and releases a call regulation by transmitting a call regulation signal carrying a specific pattern indicating regulation-free if a measured value of communication traffic is less than a given value. The mobile terminal is provided with a call request unit, a memory unit, and a call request probability generation unit as a random number generator. The memory unit stores a transmission destination telephone number having priority. The call request probability generation unit generates a call request probability that is a random number N of a minimum value 1% to a maximum value 100%. The call request unit obtains a transmission destination telephone number which has been requested by a subscriber, and receives a call regulation signal from the base station, and obtains a call regulation value M1 for a transmission destination telephone number having priority and a call regulation value M2 for other than a transmission destination telephone number having priority (M1<M2), and obtains the call request probability N by allowing the call request probability generation unit to operate, and reads the transmission destination telephone number having priority from the memory unit of the mobile terminal, thereby confirming whether or not the transmission destination telephone number exists in the transmission destination telephone number having priority. If there exists the transmission destination telephone number in the transmission destination telephone number having priority, the call request unit compares the call request probability N and the call regulation value M1, and transmits a call request signal when the call request probability N is larger than the call regulation value M1, and discards a call request from a subscriber after outputting a call rejection message onto a display of the mobile terminal when it is smaller. Conversely, if the transmission destination telephone number does not exist in the transmission destination telephone number having priority, the call request unit compares the call request probability N and the call regulation value M2, and transmits a call request signal when the call request probability N is larger than the call regulation value M2, and discards a call request from a subscriber after outputting a call rejection message onto a display of the mobile terminal when it is smaller.

Alternatively, the base station may further include a time management unit and a timer. At an approach of the time for which a large number of calls can be expected, the time management unit transmits in advance through the call regulation transmission unit a call regulation signal irrespective of a measured value of communication traffic, and allows the timer to operate after transmitting the call regulation signal. After an elapse of a given time, the time management unit releases a call regulation by transmitting a call regulation signal carrying thereon a specific pattern indicating regulation-free.

Alternatively, a host device may further be included. The host device is a device that recognizes and manages, if an earthquake or a large disaster occurs, as to in which base station area such a disaster has occurred and whether it has terminated, and that notifies a corresponding base station of disaster information about occurrence and termination of a disaster by a disaster information signal. The base station further includes a disaster correspondence unit. The disaster correspondence unit receives a disaster information signal from the host device. If a disaster occurs, it may transmit a call regulation signal through the call regulation transmission unit irrespective of a measured value of communication traffic. If a disaster has terminated, it may release a call regulation by transmitting a call regulation signal carrying thereon a specific pattern indicating regulation-free.

A system for receiving a call having priority in a call regulation of the present invention includes a host device, a plurality of exchanging centers, a plurality of base stations under control of the exchanging centers, and a plurality of mobile terminals under control of the exchanging centers, the whole being connected to configure a network. The host device is a device that manages telephone numbers including telephone numbers of a fixed network, allowing a memory unit of the host device to store in advance a specific transmission destination telephone number for which a large number of calls are expected beforehand. The exchanging centers have a traffic measurement unit, a call regulation transmission unit, a memory unit, and a timer. The traffic measurement unit within the exchanging center measures communication traffic by receiving a call request signal transmitted from the base station and counting the number of received signals in each unit of given time period, and registers a transmission destination telephone number along with the number of call requests relative to the transmission destination telephone number, within a given number and in descending order of the number of call requests, on a list of the memory unit within the exchanging center. The timer clears the list of the memory unit in the exchanging center in each unit of given time period upon existence of a transmission destination telephone number, the number of call requests for which is not less than a given value on the list of the memory unit in the exchanging center, the call regulation transmission unit within the exchanging center confirms whether or not the transmission destination telephone number corresponds to the specific transmission destination telephone number rather than a transmission destination telephone number having priority, by the specific transmission destination telephone number registered in the memory unit of the host device. If it corresponds to the specific transmission destination telephone number, the call regulation transmission unit within the exchanging center notifies a base station of a corresponding transmission destination telephone number by affixing it, as a regulation transmission destination telephone number, to a signal between a base station and an exchanging center and between an exchanging center and an exchanging center. The call regulation transmission unit within the exchanging center notifies a base station of a specific pattern indicating regulation-free if the number of call requests for the regulation transmission destination telephone number which has been notified to a base station is less than a given value on the list of the memory unit of the exchanging center. The base station includes a traffic measurement unit and a call regulation transmission unit. The traffic measurement unit within the base station measures communication traffic by receiving a call request signal transmitted from the mobile terminal and counting the number of received signals in given times. The call regulation transmission unit within the base station transmits a call regulation signal to regulate a call if a measured value of communication traffic is not less than a given value, and transmits a call regulation signal by affixing it to a regulation transmission destination telephone number within a call regulation signal if received the regulation transmission destination telephone number from the exchanging center even if a measured value of communication traffic is less than a given value, and releases a call regulation by transmitting a call regulation signal carrying a specific pattern indicating regulation-free to the mobile terminal, if a measured value of communication traffic is less than a given value, and if received from the exchanging center a specific pattern indicating regulation-free of a regulation transmission destination telephone number. The mobile terminal includes a call request unit, a memory unit, and a call request probability generation unit as a random number generator. The memory unit of the mobile terminal stores a transmission destination telephone number having priority. The call request probability generation unit generates a call request probability that is a random number N of a minimum value 1% to a maximum value 100%. The call request unit obtains a transmission destination telephone number which has been requested by a subscriber, and receives a call regulation signal from the base station, and acquires a call regulation value M1 for a transmission destination telephone number having priority, a call regulation value M2 for other than a transmission destination telephone number having priority and a regulation transmission destination telephone number, and a call regulation value M3 for a regulation transmission destination telephone number (M1 <M2<M3), as well as a regulation transmission destination telephone number, and obtains the call request probability N by allowing the call request probability generation unit to operate, and reads the transmission destination telephone number having priority from the memory unit of the mobile terminal, thereby confirming whether or not the transmission destination telephone number exists in the transmission destination telephone number having priority. The call request unit compares the call request probability N and the call regulation value M1 if the transmission destination telephone number exists in the transmission destination telephone number having priority, and transmits a call request signal when the call request probability N is larger than the call regulation value M1, and discards a call request from a subscriber after outputting a call rejection message onto a display of the mobile terminal when it is smaller. Conversely, if the transmission destination telephone number does not reside in the transmission destination telephone number having priority, the call request unit confirms whether it exists in the regulation transmission destination telephone number within the call regulation signal, and compares the call request probability N and the call regulation value M2 if it does not exist, and transmits a call request signal when the call request probability N is larger than the call regulation value M2, and discards a call request from a subscriber after outputting a call rejection message onto a display of the mobile terminal when it is smaller. Conversely, if the transmission destination telephone number exists in the regulation transmission destination telephone number, the call request unit compares the call request probability N with the call regulation value M3, and transmits a call request signal when the call request probability N is larger than the call regulation value M3, and discards a call request from a subscriber after outputting a call rejection message onto a display of the mobile terminal when it is smaller.

Alternatively, the specific transmission destination telephone number for which a large number of calls are expected beforehand may be a ticket reservation destination telephone number.

Alternatively, the host device may further include a time management unit and a timer. At an approach of the time for which a large number of calls are expected, the time management unit may notify in advance a base station of a regulation transmission destination telephone number by affixing it to a signal between a base station and an exchanging center and between an exchanging center and an exchanging center, irrespective of a measured value of communication traffic. After notifying the regulation transmission telephone number, the time management unit allows the timer of the host device to operate. After an elapse of a given time, it releases a call regulation by notifying a base station of a specific pattern indicating regulation-free.

A method for receiving a call having priority employs a system for receiving a call having priority in a call regulation according to the present invention. The system is comprised of a mobile terminal and a base station. The base station includes a traffic measurement unit and a call regulation transmission unit. The mobile terminal includes a call request unit, a memory unit, and a call request probability generation unit as a random number generator. The method includes: with the traffic measurement unit, measuring communication traffic by receiving a call request signal transmitted from the mobile terminal and counting the number of received signals in each unit of given time period; with the call regulation transmission unit, transmitting a call regulation signal to regulate a call if a measured value of communication traffic is not less than a given value, and releasing a call regulation by transmitting a call regulation signal carrying a specific pattern thereon indicating regulation-free if a measured value of communication traffic is less than a given value; storing a transmission destination telephone number having priority in the memory unit; generating a call request probability that is a random number N of a minimum value 1% to a maximum value 100% by the call request probability generation unit; with the call request unit, acquiring a transmission destination telephone number which has been requested by a subscriber, and receiving a call regulation signal from the base station, and acquiring a call regulation value M1 for a transmission destination telephone number having priority and a call regulation value M2 for other than a transmission destination telephone number having priority (M1<M2), and obtaining the call request probability N by allowing the call request probability generation unit to operate, and reading the transmission destination telephone number having priority from the memory unit, thereby confirming whether or not the transmission destination telephone number exists in the transmission destination telephone number having priority. If the transmission destination telephone number exists in the transmission destination telephone number having priority, the method includes comparing the call request probability N and the call regulation value M1, and transmitting a call request signal when the call request probability N is larger than the call regulation value M1, and discarding a call request from a subscriber after outputting a call rejection message onto a display of the mobile terminal when it is smaller. Conversely, if the transmission destination telephone number does not exist in the transmission destination telephone number having priority, the method includes comparing the call request probability N with the call regulation value M2, and transmitting a call request signal when the call request probability N is larger than the call regulation value M2, and discarding a call request from a subscriber after outputting a call rejection message onto a display of the mobile terminal when it is smaller.

Alternatively, a method for receiving a call having priority may employ a system for receiving a call having priority in a call regulation, wherein the base station is provided with a time management unit and a timer. The method may include: with the time management unit, at an approach of the time for which a large number of calls are expected, transmitting in advance a call regulation signal by the call regulation transmission unit irrespective of a measured value of communication traffic. After transmitting the call regulation signal, the method may include allowing the timer to operate, and after an elapse of a given time, releasing a call regulation by transmitting a call regulation signal carrying thereon a specific pattern indicating regulation-free.

Alternatively, a method for receiving a call having priority employs a system for receiving a call having priority in a call regulation, wherein the system includes a host device that recognizes and manages, if an earthquake or a large disaster occurs, as to which base station area has been involved in occurrence and termination of such a disaster; and the base station further includes a disaster correspondence unit. The method may include: with the host device, notifying a corresponding base station of disaster information about occurrence and termination of a disaster by a disaster information signal; and with the disaster correspondence unit, receiving a disaster information signal from the host device; if a disaster occurs, transmitting a call regulation signal by the call regulation transmission unit irrespective of a measured value of communication traffic, and if a disaster has terminated, releasing a call regulation by transmitting a call regulation signal carrying thereon a specific pattern indicating regulation-free.

A method for receiving a call having priority employs a system for receiving a call having priority in a call regulation, wherein the system includes a host device that manages telephone numbers including telephone numbers of a fixed network, a plurality of exchanging centers, a plurality of base stations under control of the exchanging centers, and a plurality of mobile terminals under control of the exchanging centers, the whole being connected to configure a network; and the exchanging centers includes a traffic measurement unit, a call regulation transmission unit, a memory unit, and a timer; the base stations includes a traffic measurement unit and a call regulation transmission unit, the mobile terminal includes a call request unit, a memory unit; and a call request probability generation unit as a random number generator. The method includes: allowing a memory unit of the host device to store a specific transmission destination telephone number for which a large number of calls are expected beforehand; with the traffic measurement unit in the exchanging center, measuring communication traffic by receiving a call request signal transmitted from the base station and counting the number of received signals in given times, and registering a transmission destination telephone numbers along with the number of call requests for the transmission destination telephone number, within a given number and in descending order of the number of call requests, on a list of the memory unit within the exchanging center; clearing the list of the memory unit within the exchanging center in given times by the timer; in the presence of a transmission destination telephone number, the number of call requests for which is not less than a given value on the list of the memory unit within the exchanging center, with the call regulation transmission unit within the exchanging center, confirming whether or not the transmission destination telephone number corresponds to the specific transmission destination telephone number rather than a transmission destination telephone number having priority, by the specific transmission destination telephone number registered in the memory unit of the host device; if it corresponds to the specific transmission destination telephone number, with the call regulation transmission unit in the exchanging center, notifying a base station of a corresponding transmission destination telephone number by affixing it, as a regulation transmission destination telephone number, to a signal between a base station and an exchanging center and between an exchanging center and an exchanging center; with the call regulation transmission unit in the exchanging center, notifying a base station of a specific pattern indicating regulation-free if the number of call requests for the regulation transmission destination telephone number which has been notified to a base station is less than a given value on the list of the memory unit of the exchanging center; with the traffic measurement unit within the base station, measuring communication traffic by receiving a call request signal transmitted from the mobile terminal and counting the number of received signals in given times; with the call regulation transmission unit within the base station, transmitting a call regulation signal to regulate a call if a measured value of communication traffic is not less than a given value, and transmitting a call regulation signal by affixing it to a regulation transmission destination telephone number within a call regulation signal if received the regulation transmission destination telephone number from the exchanging center even if a measured value of communication traffic is less than a given value, and releasing a call regulation by transmitting a call regulation signal carrying thereon a specific pattern indicating regulation-free to the mobile terminal, if a measured value of communication traffic is less than a given value, and if received from the exchanging center a specific pattern indicating regulation-free of a regulation transmission destination telephone number; storing a transmission destination telephone number having priority in the memory unit of the mobile terminal; generating a call request probability that is a random number N of a minimum value 1% to a maximum value 100% by the call request probability generation unit; with the call request unit, obtaining a transmission destination telephone number which has been requested by a subscriber, and receiving a call regulation signal from the base station, and obtaining a call regulation value M1 for a transmission destination telephone number having priority, a call regulation value M2 for other than a transmission destination telephone number having priority and a regulation transmission destination telephone number, and a call regulation value M3 for a regulation transmission destination telephone number (M1<M2<M3), as well as a regulation transmission destination telephone number, and obtaining the call request probability N by allowing the call request probability generation unit to operate, and reading the transmission destination telephone number having priority from the memory unit of the mobile terminal, thereby confirming whether or not the transmission destination telephone number exists in the transmission destination telephone number having priority; if the transmission destination telephone number exists in the transmission destination telephone number having priority, comparing the call request probability N with the call regulation value M1, and transmitting a call request signal when the call request probability N is larger than the call regulation value M1, and discarding a call request from a subscriber after issuing an output of a call rejection message onto a display of the mobile terminal when it is smaller; conversely, if the transmission destination telephone number does not exist in the transmission destination telephone number having priority, confirming whether or not it exists in the regulation transmission destination telephone number within the call regulation signal, and comparing the call request probability N with the call regulation value M2 if it does not exist, and transmitting a call request signal when the call request probability N is larger than the call regulation value M2, and discarding a call request from a subscriber after issuance of an output of a call rejection message onto a display of the mobile terminal when it is smaller; and conversely, if the transmission destination telephone number exists in the regulation transmission destination telephone number, comparing the call request probability N and the call regulation value M3, and transmitting a call request signal when the call request probability N is larger than the call regulation value M3, and discarding a call request from a subscriber after issuing an output of a call rejection message onto a display of the mobile terminal when it is smaller.

Alternatively, the specific transmission destination telephone number for which a large number of calls are expected beforehand may be a ticket reservation destination telephone number.

Alternatively, a method for receiving a call having priority employs a system for receiving a call having priority in a call regulation, wherein the host device further include a time management unit and a timer. The method may include: at an approach of the time for which a large number of calls are expected, with the time management unit, notifying in advance a base station of a regulation transmission destination telephone number by affixing it to a signal between a base station and an exchanging center and between an exchanging center and an exchanging center irrespective of a measured value of communication traffic; and after notifying the regulation transmission telephone number, allowing the timer of the host device to operate, and after an elapse of a given time, releasing a call regulation by notifying a base station of a specific pattern indicating regulation release.

A program of the invention allows a computer or a microprocessor to execute a method for receiving a call having priority by the use of the above-mentioned system for receiving a call having priority in a call regulation.

Specifically, the present invention performs optimum call regulation adapted for traffic characteristics in a mobile communication system. Additionally, in dealing with calls under regulation, the present invention provides improvement of service performance in case of emergency under regulation by raising the probability of occurrence of the result that the call request probability N is larger than a call regulation value, with respect to a call to an emergency transmission destination telephone number such as a report to the number 110 or a report to the number 119, than the case with a call to other transmission destination telephone number.

With this configuration, in the handling of calls under regulation, a call regulation value of a subscriber making a call to an emergency transmission destination telephone number such as a report to the number 110 or a report to the number 119, and that of a subscriber making a call to other transmission destination telephone number are classified into call regulation values M1 and M2, respectively. Thereby, with respect to a call to an emergency transmission destination telephone number, a call request can be satisfied in a short time even under regulation, realizing improvement of service performance.

Moreover, the present invention provides a mobile communication system including: a mobile terminal including a first memory storing a plurality of call regulation values, a second memory storing a telephone number associated with one of the plurality of call regulation values, and a random number generating unit; and a base station including means for transmitting a call regulation signal, wherein when receiving the call regulation signal from the base station, the mobile terminal compares a telephone number on the point of calling with a telephone number stored in the second memory, and if they agree, judges whether a call is possible or not depending on the call regulation value associated with the telephone number, and output of the random number generator, as well as a mobile communication terminal.

### BRIEF DESCRIPTION OF DRAWINGS

Fig. 1 is a flow chart illustrating the operation of a conventional technique;
Fig. 2 is a block diagram illustrating the construction of a first embodiment of the present invention;
Fig. 3 is a flow chart illustrating the operation of the first embodiment of the present invention;
Fig. 4 is a diagram illustrating one example of the configuration of a call regulation signal transmitted from a base station, which explains the first embodiment of the present invention;
Fig. 5 is a diagram illustrating a call request probability N and call regulation values M1 and M2 corresponding to a transmission destination telephone number, which explains the first embodiment of the present invention;
Fig. 6 is a block diagram illustrating the construction of a second embodiment of the present invention;
Fig. 7 is a diagram illustrating the range of a call request probability N, and call regulation values M1 and M2 corresponding to a transmission destination telephone number, which explain the second embodiment of the present invention;
Fig. 8 is a block diagram illustrating the construction of a third embodiment of the present invention;
Fig. 9 is a block diagram illustrating the construction of a fourth embodiment of the present invention;
Fig. 10 is a diagram illustrating one example of the configuration of a call regulation signal transmitted from a base station, which explains the fourth embodiment of the present invention;
Fig. 11 is a flow chart illustrating the operation of the fourth embodiment of the present invention;
Fig. 12 is a diagram illustrating the range of a call request probability N, and call regulation values M1, M2 and M3 corresponding to a transmission destination telephone number, which explain the fourth embodiment of the present invention; and
Fig. 13 is a block diagram illustrating the construction of a fifth embodiment of the present invention.

### BEST MODE FOR CARRYING OUT THE INVENTION

### (First Embodiment of the Invention)

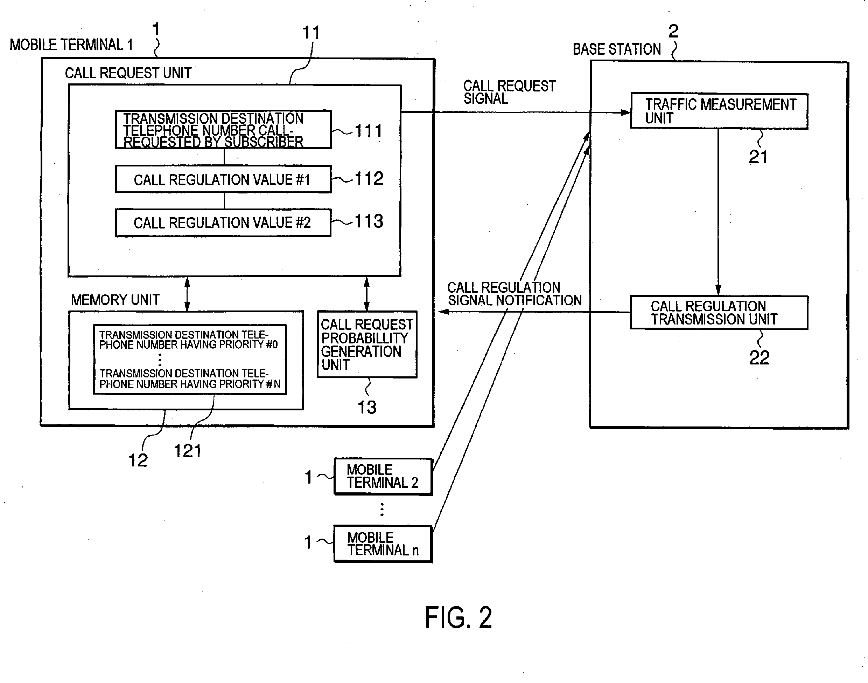

A first embodiment of the present invention will be described below with reference to Fig. 2.

Referring to Fig. 2, the present embodiment includes a mobile terminal 1 and a base station 2.

The mobile terminal 1 has a call request unit 11, a memory unit 12, and a call request probability generation unit 13.

The call request unit 11 acquires a transmission destination telephone number 111 which has been requested by a subscriber. It also receives a call regulation signal from the base station 2, and acquires call regulation values M1 112 and M2 113 (M1<M2).

The call regulation values M1 and M2 (M1<M2) are taken to be the call regulation value M1 112 for a transmission destination telephone number having priority, and the call regulation value M2 113 for other than a transmission destination telephone number having priority.

Subsequently, the call request unit 11 allows the call request probability generation unit 13, which is a random number generator within the mobile terminal 1, to operate so as to obtain a random number N (a call request probability) of a minimum value 1% to a maximum value 100%.

Subsequently, the call request unit 11 reads from the memory unit 12 transmission destination telephone numbers having priority #0 to #N121, to which destination telephone numbers of emergency such as the number 110 and the number 119 are set, and confirms whether the transmission destination telephone number 111 which has been requested by a subscriber exists in the transmission destination telephone numbers #0 to #N121 having priority in the memory unit 12. If the transmission destination telephone number 111 requested by the subscriber exists in the transmission destination telephone numbers having priority #0 to #N, the call request unit 11 compares the call request probability N with the call regulation value M1 112. The call request unit 11 transmits a call request signal when the call request probability N is larger than the call regulation value M1 112, and discards the call request from the subscriber after outputting a call reject message onto a display of the mobile terminal 1 when it is smaller.

Conversely, if the transmission destination telephone number 111 requested by the subscriber does not exist in the transmission destination telephone numbers having priority #0 to #N, the call request unit 11 compares the call request probability N with the call regulation value M2 113, and performs a similar operation.

As to the call regulation values M1 112 and M2 113 (M1 <M2), taking them to be M1<M2 raises the probability of transmission of a call request signal when the transmission destination telephone number 111 requested by the subscriber exists in the transmission destination telephone numbers #0 to #N121 having priority in the memory unit 12, than that when it does not exist.

The memory unit 12 stores the transmission destination telephone numbers having priority #0 to #N121, to which destination telephone numbers of emergency such as the number 110 and the number 119 are set.

The call request probability generation unit 13 generates a random number N (a call request probability) of a minimum value 1% to a maximum value 100%.

The base station 2 includes a traffic measurement unit 21 and a call regulation transmission unit 22.

The traffic measurement unit 21 measures communication traffic by receiving a call request signal transmitted from the mobile terminal 1 and by counting the number of received signals in each unit of given time period.

As a method for measuring communication traffic, there may be measured by the number of responses made by the base station 2 to a call request signal from the mobile terminal 1 that the call request could not be received because the line became full, namely by a ratio (%) of the number of unreceivable call requests to the number of call request signals.

The call regulation transmission unit 22 transmits a call regulation signal to regulate a call when a measured value of communication traffic is not less than a given value. It also releases the call regulation by transmitting a call regulation signal carrying thereon a specific pattern indicating regulation-free, when a measured value of communication traffic is less than a given value.

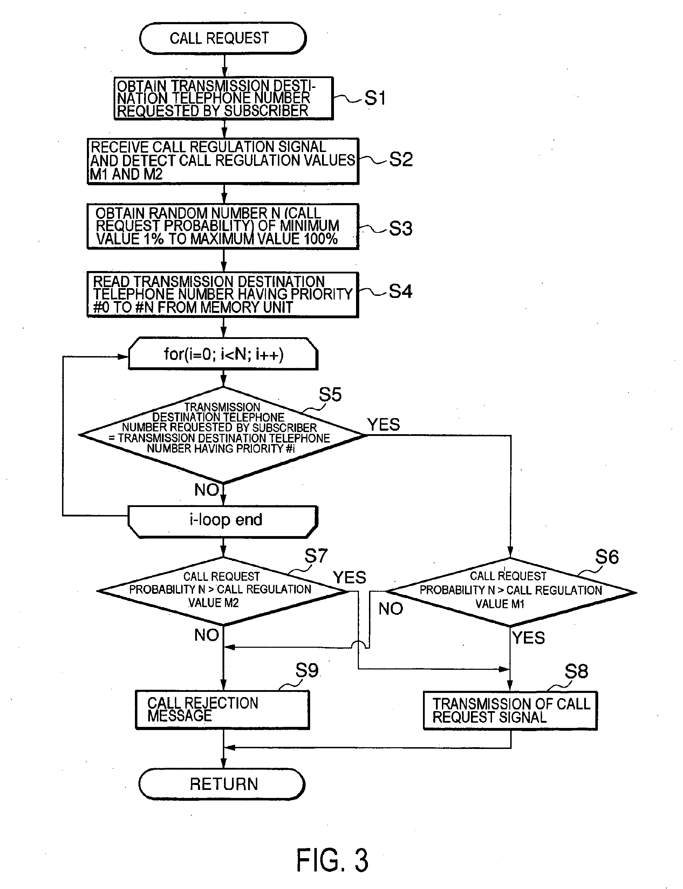

Referring next to Fig. 2, Fig. 3, Fig. 4, and Fig. 5, the operation of the present embodiment will be described in detail.

At the time of a call request, the mobile terminal 1 obtains at the call request unit 11 a transmission destination telephone number 111 which has been requested by a subscriber (S1). It also receives a call request regulation signal which has been notified from the base station 2, and in the presence of a regulation, detects its call regulation values M1 and M2 (S2).

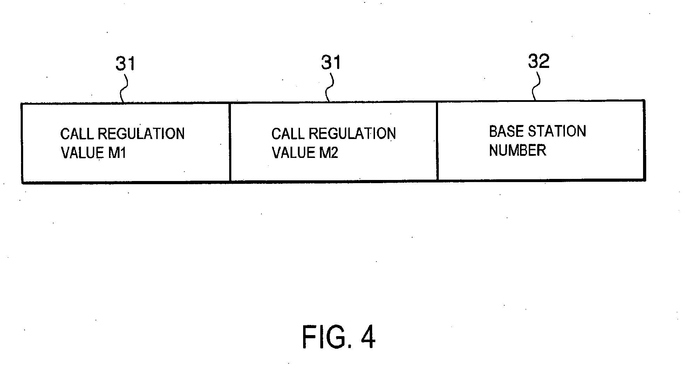

Figure 4 illustrates an example of a signal configuration of a call regulation signal transmitted from the base station 2. Reference numeral 31 designates a call regulation display unit, respectively, and reference numeral 32 designates a base station number. In the absence of a call regulation, the call regulation display unit 31 displays a specific pattern indicating regulation-free, whereas in the presence of a regulation, the unit 31 displays its call regulation value. The call regulation values M1 and M2 are taken to be the call regulation value M1 for a transmission destination telephone number having priority, and the call regulation value M2 for other than the transmission destination telephone number, respectively.

Subsequently, the call request unit 11 allows the call request probability generation unit 13, which is a random number generator in the mobile terminal 1, to operate so as to obtain a random number N (a call request probability) of a minimum value 1% to a maximum value 100% (S3).

Subsequently, the call request unit 11 reads from the memory unit (12) transmission destination telephone numbers having priority #0 to #N121, to which emergency destination telephone numbers such as the number 110 and the number 119 are set, and confirms whether a transmission destination telephone number which has been requested by a subscriber exists in the transmission destination telephone numbers having priority #0 to #N121 in the memory unit 12 (S4 and S5). If the transmission destination telephone number 111 which has been requested by the subscriber exists in the transmission destination telephone number having priority #0 to #N, the call request unit 11 compares a call request probability N and a call regulation value M1 112, and transmits a call request signal when the call request probability N is larger than the call regulation value M1 112. The unit 11 discards the call request from the subscriber after transmitting an output of a call rejection message onto the display of the mobile terminal 1 when it is smaller (S6, S8, and S9).

Conversely, if the transmission destination telephone number 111 which has been requested by the subscriber does not exist in the transmission destination telephone numbers #0 to #N in the memory unit 12, the call request unit 11 compares the call request probability N and the call regulation value M2 113, and performs a similar operation (S7, S8, and S9).

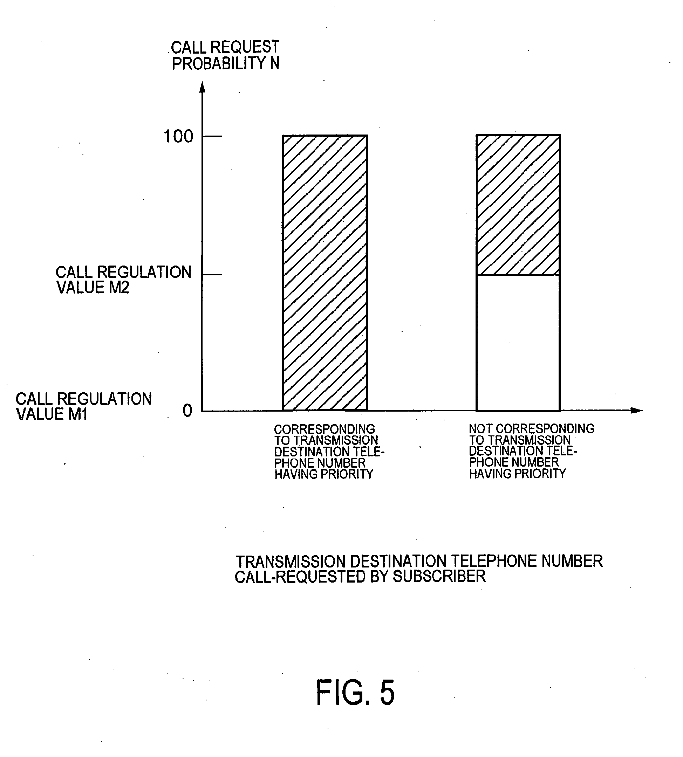

Figure 5 is a diagram illustrating the range of a call request probability N, and call regulation values M1 and M2 corresponding to a transmission destination telephone number. The call regulation values M1 and M2 (M1<M2) are the call regulation value M1 112 for a transmission destination telephone number having priority, and the call regulation value M2 113 for other than the transmission destination telephone number having priority, respectively.

Thus, by letting the call regulation values M1 112 and M2 113 (M1<M2) be M1<M2, the probability of transmission of a call request signal when the transmission destination telephone number 111 which has been requested by the subscriber exists in the transmission destination telephone number having priority #0 to #N121 in the memory unit 12, can be raised than that when it does not exist.

### (Second Embodiment of the Invention)

A second embodiment of the present invention will next be described in detail with reference to the drawings.

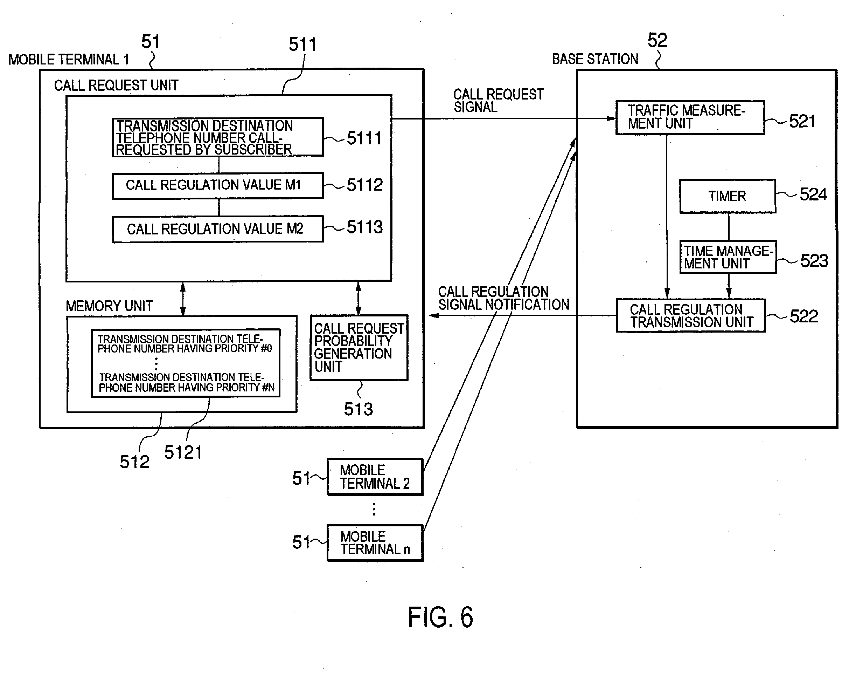

Referring to Fig. 6, the present embodiment differs from the foregoing in that a base station 52a houses a time management unit 523 and a timer 524 so as to transmit a call regulation signal irrespective of a measured value of communication traffic, during a given time period at the time for which a large number of calls are expected, such as from the last day of the year to the first day of the year, namely around twelve o'clock midnight.

At an approach of the time for which a large number of calls are expected, such as from the last day of the year to the first day of the year, namely around twelve o'clock midnight, the time management unit 523 transmits in advance through a call regulation transmission unit 522 a call regulation signal irrespective of a measured value of communication traffic. After transmitting the call regulation signal, the unit 523 allows the timer 524 to operate, and after an elapse of a given time, releases the call regulation by transmitting a call regulation signal carrying thereon a specific pattern indicating regulation-free.

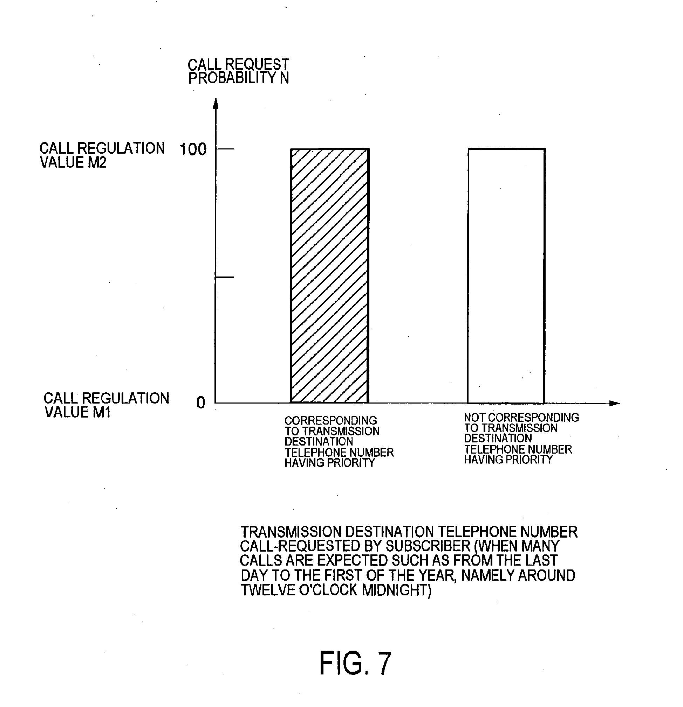

Figure 7 is a diagram illustrating the range of a call request probability N, and call regulation values M1 and M2 corresponding to a transmission destination telephone number.

Around the time for which a large number of calls are expected, such as from the last day of the year to the first day of the year, namely around twelve o'clock midnight, all calls may be regulated in some cases by letting a call regulation value for other than a transmission destination telephone numbers having priority be M2 5113=100. Even in this case, a call request from a subscriber which is a call to a destination of emergency such as a report to the number 110 or a report to the number 119 can be saved by permitting a call regulation value for a transmission destination telephone number having priority be M1 5112=0.

Alternatively, the time management unit 523 and the timer 524 may be housed in a wireless network controller, a maintenance operation center or the like rather than the base station 52, in order to notify the base station 52 of a call regulation.

### (Third Embodiment of the Invention)

A third embodiment of the present invention will next be described in detail with reference to the drawings.

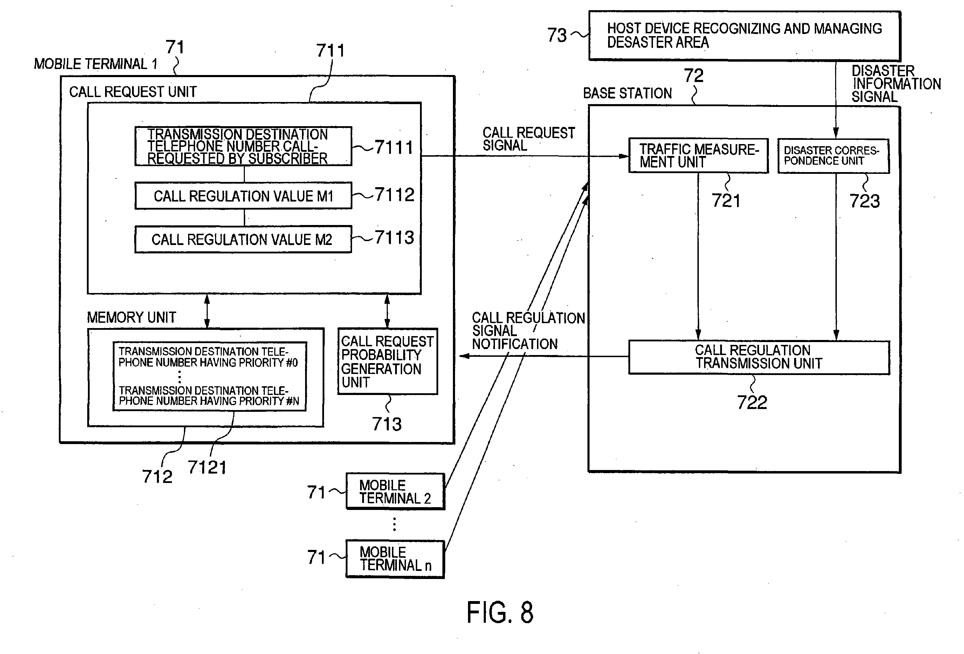

Referring to Fig. 8, the present embodiment differs from the foregoing in that a base station 72 houses a disaster correspondence unit 723, and if an earthquake or a large disaster occurs within the area of the base station 72, a call regulation signal is transmitted irrespective of a measured value of communication traffic.

A host device 73 is taken to be a device that recognizes and manages, if an earthquake or a large disaster occurs, as to in which base station area the disaster occurs and whether it has terminated and the like. The host device 73 notifies a corresponding base station 72 of disaster information about the occurrence and termination of a disaster by a disaster information signal.

The disaster correspondence unit 723 receives a disaster information signal from the host device 73, and if a disaster occurs, transmits a call regulation signal, through a call regulation transmission unit 722, irrespective of a measured value of communication traffic. When the disaster has terminated, it releases the call regulation by transmitting a call regulation signal carrying thereon a specific pattern indicating regulation-free.

With this configuration, although a large number of calls such as communication to ask for safety are expected in a base station area where an earthquake or a large disaster has occurred, a call request from a subscriber which is a call to a destination of emergency such as a report to the number 110 or a report to the number 119 can be saved by executing a call regulation more rapidly in response to disaster information about the occurrence or termination of a disaster.

Alternatively, the host device 73 may also manage emergency telephone number information of police stations, fire stations and the like near each base station area, together with the management of a disaster area. If a disaster occurs, a call regulation signal carrying emergency telephone number information (the number 110, the number 119, and the emergency telephone numbers of police stations, fire stations and the like near each base station area) may be notified to a mobile terminal 71 so as to display emergency telephone number information on a terminal's screen of the mobile terminal 71, such that any subscriber in panic can be rescued quickly.

### (Fourth Embodiment of the Invention)

A fourth embodiment of the present invention will next be described in detail with reference to the drawings.

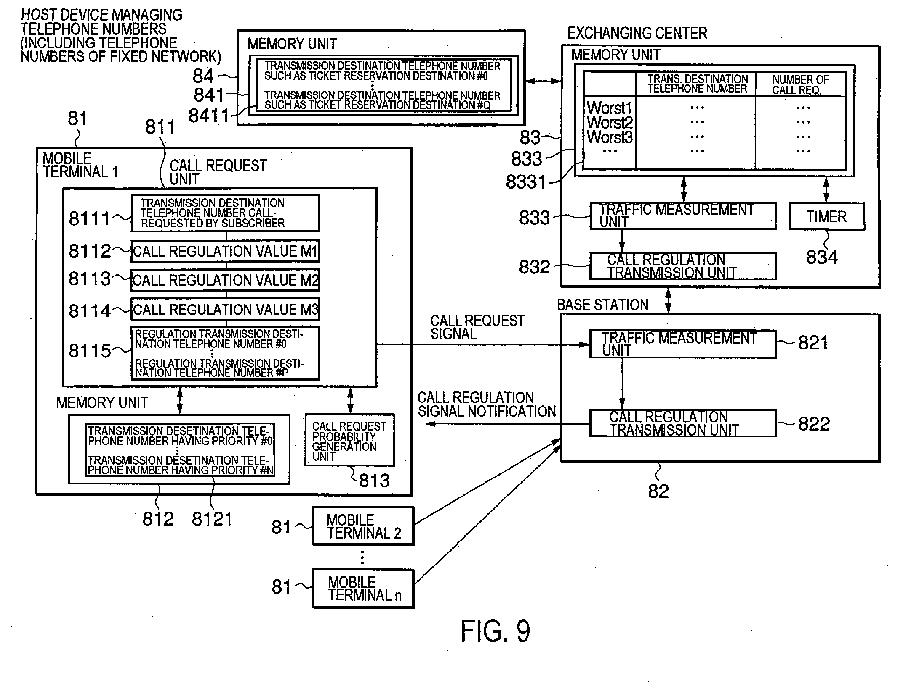

Referring to Fig. 9, the present embodiment differs from the foregoing in the following point. That is, a switching center 83 houses a traffic measurement unit 831, a call regulation transmission unit 832, a memory unit 833, and a timer 834. In a call regulation due to a large number of calls concentrated at a specific telephone number such as a ticket reservation or booking destination telephone number, it is so configured as to save a call request from a subscriber which is a call to a destination of emergency such as a report to the number 110 or a report to the number 119, and also preferentially receive a call request of a subscriber which is a call to other than a specific telephone number such as a ticket reservation telephone number.

Moreover, the present embodiment is taken to be a general mobile communication system in which there are a plurality of base stations 82 under control of the exchanging center 83, and at the position equivalent to the exchanging center 83, a plurality of exchanging centers 83 are linked to configure the overall network.

The traffic measurement unit 831 in the exchanging center 83 conducts measurement of communication traffic by receiving a call request signal transmitted from the base station 82, and counting the number of received signals in given times. The unit 831 also registers a transmission destination telephone number along with the number of call requests for the transmission destination telephone number within a given number (for example, up to five of the worst ranking) and in descending order of the number of call requests on a list 8331 of the memory unit 833.

The timer 834 clears the list 8331 of the memory unit 833 in each unit of given time period (for example, hourly).

If a transmission destination telephone number, the number of call requests for which exceeds a given value, appears on the list 8331 of the memory unit 833, the call regulation transmission 832 confirms whether or not the transmission destination telephone number corresponds to a specific telephone number such as a ticket reservation destination telephone number rather than any emergency telephone number such as a report to the number 110 or a report to the number 119, by transmission destination telephone numbers #0 to #Q8411 such as a ticket reservation destination, and the like, which are registered in the memory 841 of the host device 84 that manages telephone numbers (including telephone numbers of a fixed network).

The transmission destination telephone numbers #0 to #Q8411 for a ticket reservation destination etc. are stored in advance in the memory 841 of the host device 84 that manages telephone numbers (including telephone numbers of a fixed network).

When corresponding to a specific telephone number such as a ticket reservation destination telephone number, the call regulation transmission unit 832 notifies the base station 82 of a corresponding transmission destination telephone number by affixing it, as regulation transmission destination telephone numbers #0 to #P, to a signal between the base station and the switching center 73 and between an exchanging center 83 and another exchanging center 83.

When the number of call requests for regulation transmission destination telephone numbers #0 to #P, which have been notified to the base station 82, is less than a given value on the list 8331 of the memory unit 833, the call regulation transmission unit 832 notifies the base station 82 of a specific pattern indicating regulation release.

The traffic measurement unit 821 in the base station 82 measures communication traffic by receiving a call request signal transmitted from the mobile terminal 81, and counting the number of received signals in each unit of given time period.

The call regulation transmission unit 822 transmits a call regulation signal to regulate a call when the measured value of communication traffic is not less than a given value. Even when the measured value of communication traffic is less than a given value, if received from the exchanging center 83 regulation transmission destination telephone numbers #0 to #P, the number of call requests for which is not less than a given value, the unit 822 transmits a call regulation signal by affixing it to the regulation transmission destination telephone numbers #0 to #P within the call regulation signal. Moreover, when the measured value of communication traffic is less than a given value, and if received from the switching center 83 a specific pattern indicating regulation release of the regulation transmission destination telephone numbers #0 to #P, the call regulation transmission unit 822 releases the call regulation by transmitting a call regulation signal carrying a specific pattern indicating regulation-free to the mobile terminal 81.

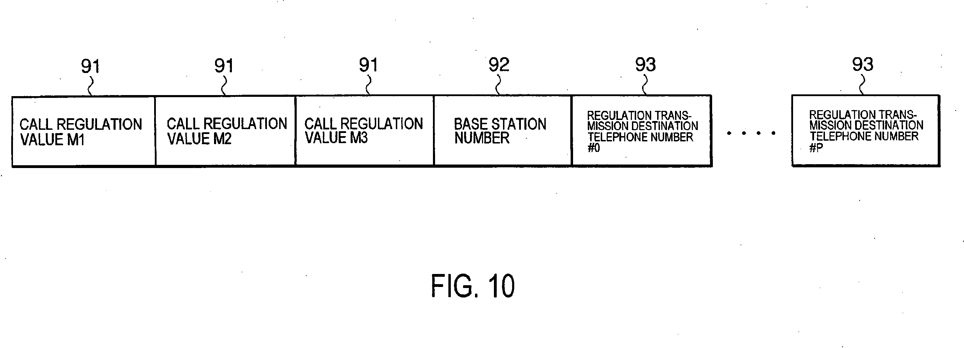

Figure 10 illustrates an example of the configuration of a call regulation signal transmitted from the base station 82, which explains the present embodiment. Reference numeral 91 designates a call regulation display unit, reference numeral 92 designates a base station number, and reference numeral 93 designates regulation transmission destination telephone numbers #0 to #P. The call regulation display unit 91 is taken to be a specific pattern indicating regulation-free in the absence of a call regulation, and a call regulation value in the presence of a call regulation. Call regulation values M1, M2, and M3 are taken to be a call regulation value M1 for a transmission destination telephone number having priority, a call regulation value M2 for other than a transmission destination telephone number having priority and a regulation transmission destination telephone number, and a call regulation value M3 for a regulation transmission destination telephone number, respectively.

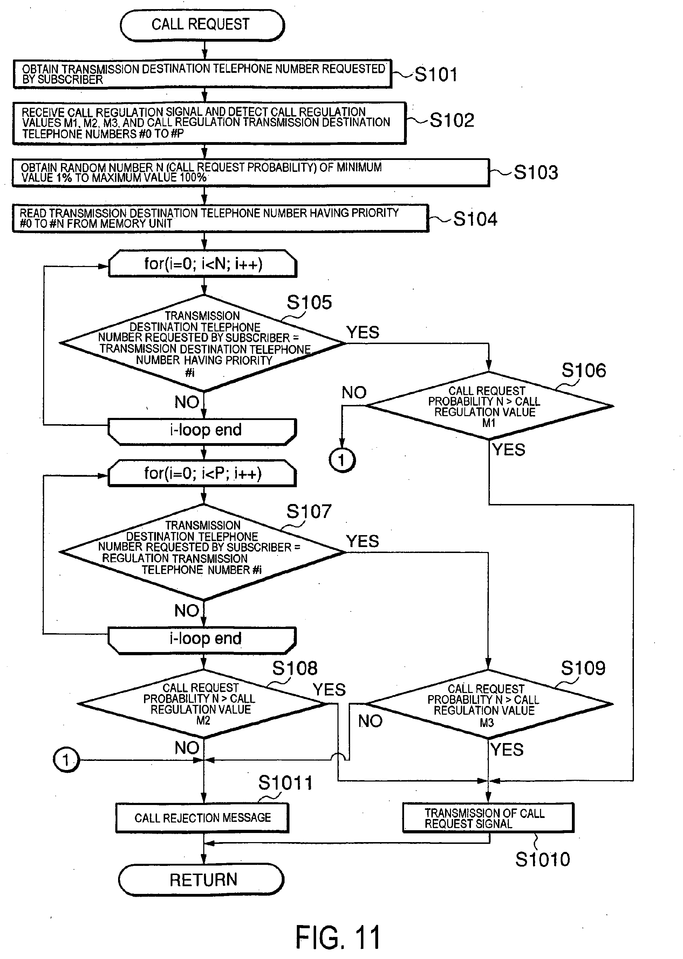

Figure 11 is a flow chart illustrating the operation of a mobile terminal, which explains the present embodiment. At the time of a call request, a mobile terminal 81 obtains at a call request unit 811 a transmission destination telephone number 8111 which has been requested by a subscriber (S101). The mobile terminal 81 also receives a call regulation signal which has been notified from the base station 72, and, in the presence of a regulation, detects its call regulation values M1 8112, M2 81113, and M3 8114, as well as regulation transmission destination telephone numbers #0 to #P8115 (S102).

Subsequently, the call request unit 811 allows the call request probability generation unit 813, which is a random number generator within the mobile terminal 81, to operate so as to obtain a random number N (a call request probability) of a minimum value 1% to a maximum value 100% (S103).

Subsequently, the call request unit 811 reads from the memory unit 812 transmission destination telephone numbers having priority #0 to #N8121, to which destination telephone numbers of emergency such as the number 110 and the number 119 are set, and confirms whether a transmission destination telephone number which has been requested by a subscriber exists in the transmission destination telephone numbers having priority #0 to #N8121 in the memory unit 812 (S104 and S105). If the transmission destination telephone number requested by the subscriber exists in the transmission destination telephone numbers having priority #0 to #N, the call request unit 811 compares the call request probability N with the call regulation value M1 8112. The call request unit 811 transmits a call request signal when the call request probability N is larger than the call regulation value M1 812, and discards the call request from the subscriber after outputting a call reject message on a display of the mobile terminal 81 when it is smaller (S106, S1010, and S1011).

Conversely, if the transmission destination telephone number 8111 requested by the subscriber does not exist in the transmission destination telephone numbers having priority #0 to #N, the call request unit 811 confirms whether it resides in regulation transmission destination telephone numbers #0 to #P within a call regulation signal (S107). If it does not exist, the call request unit 811 compares the call request probability N and the call regulation value M2 8113, and performs a similar operation (S108, S1010, and S1011). If it resides, the call request unit 811 compares the call request probability N with the call regulation value M3 8113, and performs a similar operation (S109, S1010, and S1011).

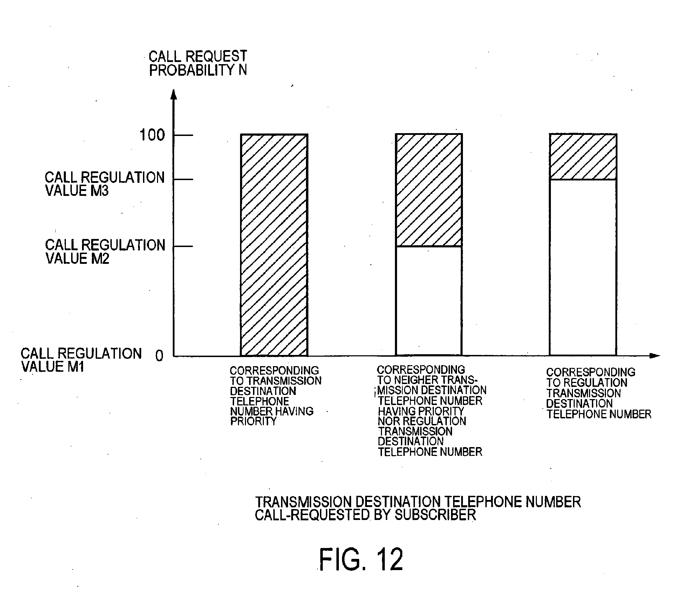

Figure 12 is a diagram illustrating the range of a call request probability N, and call regulation values M1, M2, and M3 corresponding to a transmission destination telephone number. The call regulation values M1, M2, and M3 (M1 <M2<M3) are a call regulation value M1 8112 for a transmission destination telephone number having priority, a call regulation value M2 8113 for other than a transmission destination telephone number having priority and a regulation transmission destination telephone number, and a call regulation value M3 8114 for a regulation transmission destination telephone number, respectively.

Thus, by taking the call regulation values M1 8112, M2 8113, and M3 8113 (M1 <M2<M3) to be M1 <M2<M3, in a call regulation due to a large number of calls concentrated at a specific telephone number such as a ticket reservation destination telephone number, it is able to save a call request from a subscriber which is a call to a destination of emergency such as a report to the number 110 or a report to the number 119, and also preferentially receive a call request of a subscriber which is a call to other than a specific telephone number such as a ticket reservation telephone number.

Additionally, congestion of the base station 82 and upper host devices due to a large number of calls concentrated at a specific telephone number can be prevented at the point of the mobile terminal 81.

In an alternative, when the mobile terminal 81 receives a call regulation signal carrying regulation transmission destination telephone numbers #0 to #P, redial to the regulation transmission destination telephone numbers #0 to #P may be overridden or invalidated for a given time, and a message "The telephone number you have called is now very crowded" or the like, may be displayed on a terminal's screen of the mobile terminal 81, such that a subscriber can recognize crowdedness.

In other alternative, the host device 84 that manages telephone numbers (including telephone numbers of a fixed network) may be housed in a wireless network controller, a maintenance operation center, or the like.

### (Fifth Embodiment of the Invention)

A fifth embodiment of the present invention will next be described in detail with reference to the drawings.

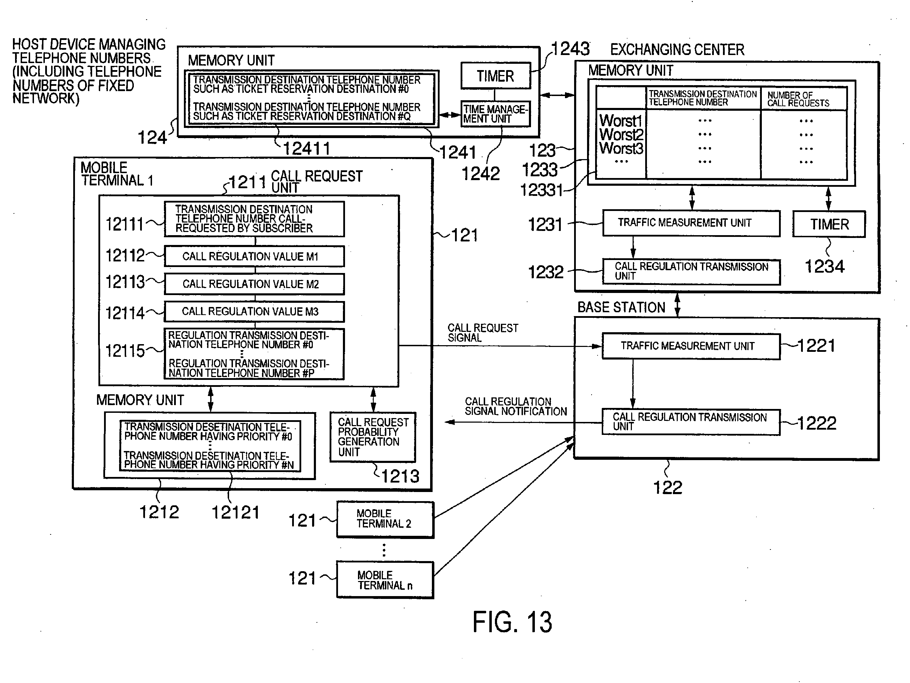

Referring to Fig. 13, the present embodiment differs from the foregoing in that a host device 124 managing telephone numbers (including telephone numbers of a fixed network) houses a time management unit 1242 and a timer 1243, and a call regulation signal is transmitted in advance during a given period of time irrespective of a measured value of communication traffic, when it is expected that a specific telephone number is flooded with call requests in a specific period of time.

When it is expected that a specific telephone number is flooded with call requests in a specific period of time, the time is set to the time management unit 1242. At an approach of the set time, the time management unit 1242 notifies in advance a base station 122 of corresponding regulation transmission destination telephone numbers #0 to #P by affixing them to a signal between a base station 122 and an exchanging center 123, and between an exchanging center 123 and another exchanging center 123.

After notifying the base station 122 of the regulation transmission destination telephone numbers #0 to #P to regulate a call, the timer 1243 is operated. After an elapse of a given time, a specific pattern indicating regulation release is notified to the base station 122.

Thereby, when it is expected that a specific telephone number is flooded with call requests in a specific period of time, by applying a regulation in advance, congestion of the base station 122 and upper host devices due to a large number of calls concentrated at a specific telephone number can be prevented in advance at the point of the mobile terminal 121.

Although the range to notify and regulate the regulation transmission destination telephone numbers #0 to #P to regulate a call may be over the entire network, it may be, for example, only a densely populated downtown area susceptible to congestion.

In an alternative, under a program of a method for receiving a call having priority by the use of the system for receiving a call having priority in call regulation according to the foregoing first to fifth embodiments of the present invention, it is possible to allow a computer or a microprocessor to execute the method for receiving a call having priority.

### INDUSTRICAL APPLICABILITY

Thus, the present invention has the following effects.

A first effect is to enable optimum call regulation adapted for traffic characteristics.

The reason for this is as follows. In the system that the mobile terminal 1 receives a call regulation signal from the base station 2, and, when making a call during the time it stays in a regulation area, judges whether or not it is possible to call by comparing a random number value N generated by itself with a call regulation value M from the base station, the aim is to dynamically change call regulation values M1 and M2 to be notified from the base station 2, depending on traffic characteristic.

A second effect is to configure such that a call request from a subscriber making a call to a destination of emergency such as a report to the number 110 or a report to the number 119 can be satisfied in a short time even under regulation.

The reason for this is as follows. In dealing with calls under regulation, a call regulation value of a subscriber making a call to an emergency transmission destination telephone number such as a report to the number 110 or a report to the number 119, and that of a subscriber making a call to other transmission destination telephone number are classified into call regulation values M1 and M2, respectively. Thereby, the probability to occurrence of the result that the call request probability N is larger than a call regulation value can be raised with respect to a call to the emergency transmission destination telephone number, than the case with a call to other transmission destination telephone number.

A third effect is that, although around the time for which a large number of calls are expected, such as from the last day of the year to the first day of the year, namely around twelve o'clock midnight, all calls may be regulated in some cases, even in this case, it is possible to save a call request from a subscriber which is a call to a destination of emergency such as a report to the number 110 or a report to the number 119.

The reason for this is as follows. At an approach of the time for which a large number of calls are expected, such as from the last day of the year to the first day of the year, namely around twelve o'clock midnight, a call regulation transmission unit transmits in advance a call regulation signal irrespective of a measured value of communication traffic. After transmitting the call regulation signal, a timer is operated. After an elapse of a given time, a call regulation signal carrying a specific pattern indicating regulation-free is transmitted to release the call regulation.

A fourth effect is that, although a large number of calls such as communication to ask for safety are expected in a base station area where an earthquake or a large disaster has occurred, a call request from a subscriber which is a call to a destination of emergency such as a report to the number 110 or a report to the number 119 can be saved by executing a call regulation more rapidly in response to disaster information about the occurrence or termination of a disaster.

The reason for this is as follows. A disaster correspondence unit is housed in a base station, and the disaster correspondence unit receives a disaster information signal from a host device. If a disaster occurs, a call regulation transmission unit transmits a call regulation signal irrespective of a measured value of communication traffic. If the disaster has terminated, a call regulation signal carrying a specific pattern indicating regulation-free is transmitted to release the call regulation.

A fifth effect is that, in a call regulation due to a large number of calls concentrated at a specific telephone number such as a ticket reservation destination telephone number, a call request from a subscriber which is a call to a destination of emergency such as a report to the number 110 or a report to the number 119 can be saved, and a call request of a subscriber which is a call to other than a specific telephone number such as a ticket reservation telephone number can also be preferentially received.

The reason for this is as follows. An exchanging center houses a traffic measurement unit, a call regulation transmission unit, a memory unit, and a timer. The respective call regulation values M1, M2, and M3 (M1<M2<M3) are taken to be M1<M2<M3. Thereby, in a call regulation due to a large number of calls concentrated at a specific telephone number such as a ticket reservation destination telephone number, not only a call request from a subscriber which is a call to a destination of emergency such as a report to the number 110 or a report to the number 119 can be saved, but also a call request of a subscriber which is a call to other than a specific telephone number such as a ticket reservation telephone number can be preferentially received.

## Claims

1. A system for receiving a call having priority in a call regulation, comprising a mobile terminal and a base station,
said base station comprising a traffic measurement unit and a call regulation transmission unit, wherein
said traffic measurement unit measures communication traffic by receiving a call request signal transmitted from said mobile terminal and counting the number of received signals in a unit of given time period,
said call regulation transmission unit transmits a call regulation signal to regulate a call if a measured value of communication traffic is not less than a given value, and releases a call regulation by transmitting a call regulation signal carrying thereon a specific pattern indicating regulation-free if a measured value of communication traffic is less than a given value,
said mobile terminal comprising a call request unit, a memory unit, and a call request probability generation unit as a random number generator, wherein
said memory unit stores a transmission destination telephone number having priority,
said call request probability generation unit generates a call request probability that is a random number N of a minimum value 1% to a maximum value 100%,
said call request unit obtains a transmission destination telephone number which has been requested by a subscriber, and receives a call regulation signal from said base station, and obtains a call regulation value M1 for a transmission destination telephone number having priority and a call regulation value M2 for other than a transmission destination telephone number having priority (M1<M2), and acquires said call request probability N by allowing said call request probability generation unit to operate, and reads said transmission destination telephone number having priority from said memory unit of said mobile terminal, thereby confirming whether or not said transmission destination telephone number resides in said transmission destination telephone number having priority, if said transmission destination telephone number exists in said transmission destination telephone number having priority, said call request unit compares said call request probability N with said call regulation value M1, and transmits a call request signal when said call request probability N is larger than said call regulation value M1, and discards a call request from a subscriber after outputting a call rejection message onto a display of said mobile terminal when it is smaller, and
conversely, if said transmission destination telephone number does not exist in said transmission destination telephone number having priority, said call request unit compares said call request probability N and said call regulation value M2, and transmits a call request signal when said call request probability N is larger than said call regulation value M2, and discards a call request from a subscriber after outputting a call rejection message onto a display of said mobile terminal when it is smaller.

2. The system for receiving a call having priority in a call regulation according to claim 1, said base station further comprising a time management unit and a timer, wherein
at an approach of the time for which a large number of calls are expected, said time management unit transmits in advance through said call regulation transmission unit a call regulation signal irrespective of a measured value of communication traffic, and allows said timer to operate after transmitting said call regulation signal, and after an elapse of a given time, releases a call regulation by transmitting a call regulation signal carrying thereon a specific pattern indicating regulation-free.

3. The system for receiving a call having priority in a call regulation according to claim 1, further comprising a host device, wherein
said host device is a device that recognizes and manages, if an earthquake or a large disaster occurs, as to in which base station area such a disaster has occurred and whether it has terminated, and that notifies a corresponding base station of disaster information about occurrence and termination of a disaster by a disaster information signal, said base station further comprising a disaster correspondence unit, wherein
said disaster correspondence unit receives a disaster information signal from said host device, and if a disaster occurs, transmits a call regulation signal through said call regulation transmission unit irrespective of a measured value of communication traffic, and if a disaster has terminated, releases a call regulation by transmitting a call regulation signal carrying a specific pattern indicating regulation-free.

4. A system for receiving a call having priority in a call regulation, comprising a host device, a plurality of exchanging centers, a plurality of base stations under control of said exchanging centers, and a plurality of mobile terminals under control of said exchanging centers, the whole being connected to configure a network, wherein
said host device is a device that manages telephone numbers including telephone numbers of a fixed network, allowing a memory unit of said host device to store in advance a specific transmission destination telephone number for which a large number of calls are expected beforehand,
said exchanging centers have a traffic measurement unit, a call regulation transmission unit, a memory unit, and a timer,
said traffic measurement unit within said exchanging center measures communication traffic by receiving a call request signal transmitted from said base station and counting the number of received signals in a unit of given time period, and registers a transmission destination telephone number along with the number of call requests corresponding to said transmission destination telephone number within a given number and in descending order of the number of call requests, on a list of said memory unit within the exchanging center,
said timer clears the list of said memory unit within said switching center in given times,
in the presence of a transmission destination telephone number, the number of call requests for which is not less than a given value on the list of said memory unit within said exchanging center, said call regulation transmission unit within said exchanging center confirms whether or not said transmission destination telephone number corresponds to said specific transmission destination telephone number rather than a transmission destination telephone number having priority, by said specific transmission destination telephone number registered in said memory unit of said host device,
if it corresponds to said specific transmission destination telephone number, said call regulation transmission unit within said exchanging center notifies a base station of a corresponding transmission destination telephone number by affixing it, as a regulation transmission destination telephone number, to a signal between a base station and an exchanging center and between an exchanging center and an exchanging center,
said call regulation transmission unit within said exchanging center notifies a base station of a specific pattern indicating regulation-free if the number of call requests for said regulation transmission destination telephone number which has been notified to a base station is less than a given value on the list of said memory unit of said exchanging center, said base stations comprising a traffic measurement unit and a call regulation transmission unit, wherein
said traffic measurement unit within said base station measures communication traffic by receiving a call request signal transmitted from said mobile terminal and counting the number of received signals in given times,
said call regulation transmission unit within said base station transmits a call regulation signal to regulate a call if a measured value of communication traffic is not less than a given value, and transmits a call regulation signal by affixing it to a regulation transmission destination telephone number within a call regulation signal if received said regulation transmission destination telephone number from said exchanging center even if a measured value of communication traffic is less than a given value, and releases a call regulation by transmitting a call regulation signal carrying a specific pattern indicating regulation-free to said mobile terminal, if a measured value of communication traffic is less than a given value, and if received from said exchanging center a specific pattern indicating regulation-free of a regulation transmission destination telephone number,
said mobile terminal comprising a call request unit, a memory unit, and a call request probability generation unit as a random number generator, wherein
said memory unit of said mobile terminal stores a transmission destination telephone number having priority,
said call request probability generation unit generates a call request probability that is a random number N of a minimum value 1% to a maximum value 100%,
said call request unit acquires a transmission destination telephone number which has been requested by a subscriber, and receives a call regulation signal from said base station, and acquiring a call regulation value M1 for a transmission destination telephone number having priority, a call regulation value M2 for other than a transmission destination telephone number having priority and a regulation transmission destination telephone number, and a call regulation value M3 for a regulation transmission destination telephone number (M1<M2<M3), as well as a regulation transmission destination telephone number, and acquires said call request probability N by allowing said call request probability generation unit to operate, and reads said transmission destination telephone number having priority from said memory unit of said mobile terminal, thereby confirming whether or not said transmission destination telephone number resides in said transmission destination telephone number having priority,
said call request unit compares said call request probability N and said call regulation value M1 if the transmission destination telephone number resides in said transmission destination telephone number having priority, and transmits a call request signal when said call request probability N is larger than said call regulation value M1, and discards a call request from a subscriber after outputting a call rejection message onto a display of said mobile terminal when it is smaller,
conversely, if said transmission destination telephone number does not reside in said transmission destination telephone number having priority, said call request unit confirms whether it resides in said regulation transmission destination telephone number within said call regulation signal, and compares said call request probability N and said call regulation value M2 if it does not reside, and transmits a call request signal when said call request probability N is larger than said call regulation value M2, and discards a call request from a subscriber after outputting a call rejection message onto a display of said mobile terminal when it is smaller, and
conversely, if said transmission destination telephone number resides in said regulation transmission destination telephone number, said call request unit compares said call request probability N and said call regulation value M3, and transmits a call request signal when said call request probability N is larger than said call regulation value M3, and discards a call request from a subscriber after outputting a call rejection message onto a display of said mobile terminal when it is smaller.

5. The system for receiving a call having priority in a call regulation according to claim 4, wherein said specific transmission destination telephone number for which a large number of calls are expected beforehand is a ticket reservation destination telephone number.

6. The system for receiving a call having priority in a call regulation according to claim 4, wherein
said host device further comprises a time management unit and a timer,
at an approach of the time for which a large number of calls are expected beforehand, said time management unit notifies in advance a base station of a regulation transmission destination telephone number by affixing it to a signal between a base station and an exchanging center and between an exchanging center and an exchanging center, irrespective of a measured value of communication traffic, and
after notifying a regulation transmission telephone number, said time management unit allows said timer of said host device to operate, and after an elapse of a given time, releases a call regulation by notifying a base station of a specific pattern indicating regulation-free.

7. A method for receiving a call having priority with use of a system for receiving a call having priority in a call regulation, said system comprising a mobile terminal and a base station,
said base station comprising a traffic measurement unit and a call regulation transmission unit,
said mobile terminal comprising a call request unit, a memory unit, and a call request probability generation unit as a random number generator,
said method comprising:
by means of said traffic measurement unit, measuring communication traffic by receiving a call request signal transmitted from said mobile terminal and counting the number of received signals in given times,
by means of said call regulation transmission unit, transmitting a call regulation signal to regulate a call if a measured value of communication traffic is not less than a given value, and releasing a call regulation by transmitting a call regulation signal carrying a specific pattern indicating regulation-free if a measured value of communication traffic is less than a given value,
storing a transmission destination telephone number having priority in said memory unit,
generating a call request probability that is a random number N of a minimum value 1% to a maximum value 100% by said call request probability generation unit,
with said call request unit, acquiring a transmission destination telephone number which has been requested by a subscriber, and receiving a call regulation signal from said base station, and acquiring a call regulation value M1 for a transmission destination telephone number having priority and a call regulation value M2 for other than a transmission destination telephone number having priority (M1<M2), and obtaining said call request probability N by allowing said call request probability generation unit to operate, and reading said transmission destination telephone number having priority from said memory unit, thereby confirming whether or not said transmission destination telephone number resides in said transmission destination telephone number having priority,
if said transmission destination telephone number resides in said transmission destination telephone number having priority, comparing said call request probability N and said call regulation value M1, and transmitting a call request signal when said call request probability N is larger than said call regulation value M1, and discarding a call request from a subscriber after outputting a call rejection message onto a display of said mobile terminal when it is smaller, and
conversely, if said transmission destination telephone number does not reside in said transmission destination telephone number having priority, comparing said call request probability N with said call regulation value M2, and transmitting a call request signal when said call request probability N is larger than said call regulation value M2, and discarding a call request from a subscriber after outputting a call rejection message onto a display of said mobile terminal when it is smaller.

8. A method for receiving a call having priority with use of a system for receiving a call having priority in a call regulation according to claim 6, said base station further comprising a time management unit and a timer,
said method comprising:
with said time management unit, at an approach of the time for which a large number of calls are expected, transmitting in advance a call regulation signal by said call regulation transmission unit irrespective of a measured value of communication traffic, and allowing said timer to operate after transmitting said call regulation signal, and after an elapse of a given time, releasing a call regulation by transmitting a call regulation signal carrying a specific pattern indicating regulation-free.

9. A method for receiving a call having priority with use of a system for receiving a call having priority in a call regulation according to claim 6, said system including a host device that recognizes and manages, if an earthquake or a large disaster occurs, as to in which base station area such a disaster has occurred and terminated, said base station further comprising a disaster correspondence unit,
by means of said host device, notifying a corresponding base station of disaster information about occurrence and termination of a disaster by a disaster information signal, and
by means of said disaster correspondence unit, receiving a disaster information signal from said host device, and if a disaster occurs, transmitting a call regulation signal by said call regulation transmission unit irrespective of a measured value of communication traffic, and if a disaster has terminated, releasing a call regulation by transmitting a call regulation signal carrying a specific pattern indicating regulation-free.

10. A method for receiving a call having priority by the use of a system for receiving a call having priority in a call regulation, said system comprising a host device that manages telephone numbers including telephone numbers of a fixed network, a plurality of exchanging centers, a plurality of base stations under control of said exchanging centers, and a plurality of mobile terminals under control of said exchanging centers, the whole being connected to configure a network,
said exchanging centers comprising a traffic measurement unit, a call regulation transmission unit, a memory unit, and a timer,
said base stations comprising a traffic measurement unit and a call regulation transmission unit,
said mobile terminal comprising a call request unit, a memory unit, and a call request probability generation unit as a random number generator,
said method comprising:
allowing a memory unit of said host device to store a specific transmission destination telephone number for which a large number of calls are expected beforehand;
with said traffic measurement unit within said exchanging center, measuring communication traffic by receiving a call request signal transmitted from said base station and counting the number of received signals in given times, and registering a transmission destination telephone numbers along with the number of call requests for said transmission destination telephone number within a given number and in descending order of the number of call requests, on a list of said memory unit within said exchanging center;
clearing the list of said memory unit within said exchanging center in given times by said timer,
in the presence of a transmission destination telephone number, the number of call requests for which is not less than a given value on the list of said memory unit within said exchanging center, with said call regulation transmission unit within said exchanging center, confirming whether or not said transmission destination telephone number corresponds to said specific transmission destination telephone number rather than a transmission destination telephone number having priority, by said specific transmission destination telephone number registered in said memory unit of said host device;
if it corresponds to said specific transmission destination telephone number, with said call regulation transmission unit within said exchanging center, notifying a base station of a corresponding transmission destination telephone number by affixing it, as a regulation transmission destination telephone number, to a signal between a base station and an exchanging center and between an exchanging center and an exchanging center;
with said call regulation transmission unit within said exchanging center, notifying a base station of a specific pattern indicating regulation-free if the number of call requests for said regulation transmission destination telephone number which has been notified to a base station is less than a given value on the list of said memory unit of said exchanging center;
with said traffic measurement unit within said base station, measuring communication traffic by receiving a call request signal transmitted from said mobile terminal and counting the number of received signals in given times;
with said call regulation transmission unit within said base station, transmitting a call regulation signal to regulate a call if a measured value of communication traffic is not less than a given value, and transmitting a call regulation signal by affixing it to a regulation transmission destination telephone number within a call regulation signal if received said regulation transmission destination telephone number from said exchanging center even if a measured value of communication traffic is less than a given value, and releasing a call regulation by transmitting a call regulation signal carrying thereon a specific pattern indicating regulation-free to said mobile terminal, if a measured value of communication traffic is less than a given value, and if received from said exchanging center a specific pattern indicating regulation-free of a regulation transmission destination telephone number;
storing a transmission destination telephone number having priority in said memory unit of said mobile terminal;
generating a call request probability that is a random number N of a minimum value 1% to a maximum value 100% by said call request probability generation unit;
with said call request unit, acquiring a transmission destination telephone number which has been requested by a subscriber, and receiving a call regulation signal from said base station, and obtaining a call regulation value M1 for a transmission destination telephone number having priority, a call regulation value M2 for other than a transmission destination telephone number having priority and a regulation transmission destination telephone number, and a call regulation value M3 for a regulation transmission destination telephone number (M1<M2<M3), as well as a regulation transmission destination telephone number, and obtaining said call request probability N by allowing said call request probability generation unit to operate, and reading said transmission destination telephone number having priority from said memory unit of said mobile terminal, thereby confirming whether or not said transmission destination telephone number resides in said transmission destination telephone number having priority;
if said transmission destination telephone number resides in said transmission destination telephone number having priority, comparing said call request probability N and said call regulation value M1, and transmitting a call request signal when said call request probability N is larger than said call regulation value M1, and discarding a call request from a subscriber after outputting a call rejection message onto a display of said mobile terminal when it is smaller,
conversely, if said transmission destination telephone number does not exist in said transmission destination telephone number having priority, confirming whether or not it exists in said regulation transmission destination telephone number within said call regulation signal, and comparing said call request probability N and said call regulation value M2 if it does not exist, and transmitting a call request signal when said call request probability N is larger than said call regulation value M2, and discarding a call request from a subscriber after outputting a call rejection message onto a display of said mobile terminal when it is smaller; and
conversely, if said transmission destination telephone number exists in said regulation transmission destination telephone number, comparing said call request probability N with said call regulation value M3, and transmitting a call request signal when said call request probability N is larger than said call regulation value M3, and discarding a call request from a subscriber after outputting a call rejection message onto a display of said mobile terminal when it is smaller.

11. A method for receiving a call having priority by the use of a system for receiving a call having priority in a call regulation according to claim 10, wherein said specific transmission destination telephone number for which a large number of calls are expected beforehand is a ticket reservation destination telephone number.

12. A method for receiving a call having priority by the use of a system for receiving a call having priority in a call regulation according to claim 10, said host device further comprising a time management unit and a timer,
said method comprising:
at an approach of the time for which a large number of calls are expected beforehand, by means of said time management unit, notifying in advance a base station of a regulation transmission destination telephone number by affixing it to a signal between a base station and an exchanging center and between an exchanging center and an exchanging center irrespective of a measured value of communication traffic; and
allowing said timer of said host device to operate after notifying a regulation transmission telephone number, and after an elapse of a given time, releasing a call regulation by notifying a base station of a specific pattern indicating regulation release.

13. A program for allowing a computer or a microprocessor to execute a method for receiving a call having priority with use of a system for receiving a call having priority in a call regulation according to claim 7.

14. A mobile communication system comprising:
a mobile terminal comprising a first memory storing a plurality of call regulation values, a second memory storing a telephone number associated with one of said plurality of call regulation values, and a random number generator; and
a base station comprising means for transmitting a call regulation signal, wherein
when receiving said call regulation signal from said base station, said mobile terminal compares a telephone number on the point of calling with a telephone number stored in said second memory, and if they agree, judges whether a call is possible or not depending on said call regulation value associated with said telephone number and output of said random number generator.

15. A mobile communication terminal of a mobile communication system comprising:
a first memory storing a plurality of call regulation values, a second memory storing a telephone number associated with one of said plurality of call regulation values, and a random number generator, wherein
when receiving a call regulation signal from a base station, a telephone number on the point of calling is compared with a telephone number stored in said second memory, and if they agree, judges whether a call is possible or not depending on said call regulation value associated with said telephone number and output of said random number generator.

## Amended claims

### Amended claims under Art. 19.1 PCT

**10.** it is smaller.

**11.** A method for receiving a call having priority by the use of a system for receiving a call having priority in a call regulation according to claim 10, wherein said specific transmission destination telephone number for which a large number of calls are expected beforehand is a ticket reservation destination telephone number.

**12.** A method for receiving a call having priority by the use of a system for receiving a call having priority in a call regulation according to claim 10, said host device further comprising a time management unit and a timer,
said method comprising:
at an approach of the time for which a large number of calls are expected beforehand, by means of said time management unit, notifying in advance a base station of a regulation transmission destination telephone number by affixing it to a signal between a base station and an exchanging center and between an exchanging center and an exchanging center irrespective of a measured value of communication traffic; and
allowing said timer of said host device to operate after notifying a regulation transmission telephone number, and after an elapse of a given time, releasing a call regulation by notifying a base station of a specific pattern indicating regulation release.

**13.** A program for allowing a computer or a microprocessor to execute a method for receiving a call having priority with use of a system for receiving a call having priority in a call regulation according to claim 7.

**14.** (deleted)

**15.** (deleted)
